# EUROPEAN PATENT APPLICATION

(11) **EP 3 527 788 A1**
(43) Date of publication of application: **21.08.2019**
(21) Application number: 19152949.4
(22) Date of filing: 22.01.2019
(51) Int. Cl.: F01D 21/04, F01D 21/08, F01D 25/16

(54) **GAS TURBINE ENGINE FAN MOUNTING SYSTEM**

(30) Priority: 20.02.2018 GB 201802694
(71) Applicant: Rolls-Royce plc, London SW1E 6AT (GB)
(72) Inventor: Zilli, Andrea, Derby, Derbyshire DE24 8BJ (GB)
(74) Representative: Rolls-Royce plc

(57) **Abstract**

A gas turbine engine (10) comprises a fan (13), a fan shaft (32) configured to rotationally support the fan (13), a first bearing (34) configured to rotationally support the fan shaft (32) and a support arrangement configured to support the first bearing (34). The support arrangement comprises a first support member (38) coupled to the first bearing (34) and to a mechanical ground (40) to define a first load path, and a second support member (44) coupled to the mechanical ground (40) and the first bearing (34) to define a second load path. The second support member (44) is coupled to one of the first bearing (34) and the mechanical ground (40) by a first frangible link (46). In normal use, a load extends between the bearing (34) and the mechanical ground (40) through the first and second loads paths, and in the event of a predetermined radial load being applied to the first bearing (34), the frangible link (46) breaks such that the load extends between the first bearing (34) and the mechanical ground (40) through the first load path, but not the second load path.

## Description

The present disclosure concerns a gas turbine engine have a fan mounting arrangement. Aircraft gas turbine engines typically comprise a fan for providing propulsive thrust. In the event that one or more fan blades become detached during operation, an out of balance condition will occur. This will result in large loads on the fan mounting arrangement, particularly the shafts and bearings. It is generally a regulatory condition that the fan can continue to rotate under these circumstances, in spite of a shutdown of the engine.

One prior solution is to provide a frangible connection between a fan shaft support bearing and the associated static structure, which breaks in the event that an out of balance condition occurs. A typical example is described in US 6494032. In this prior solution, a pair of bearings is provided, which support the fan. In the event of damage to the fan, the frangible connection breaks, such that the fan is only supported by a single bearing at the front end of the engine. Consequently, the fan orbits about the engine longitudinal axis.

The present invention seeks to provide an improved gas turbine engine fan mounting system.

According to a first aspect there is provided a gas turbine engine comprising:
a fan;
a fan shaft configured to rotationally support the fan
a first bearing configured to rotationally support the fan shaft; and
a support arrangement configured to support the first bearing;
the support arrangement comprising a first support member coupled to the first bearing and to a mechanical ground to define a first load path, and a second support member coupled to the mechanical ground and the first bearing to define a second load path, the second support member being coupled to one of the first bearing and the mechanical ground by a first frangible link, such that, in normal use, a load extends between the bearing and the mechanical ground through the first and second loads paths, and in the event of a predetermined radial load being applied to the first bearing, the frangible link breaks such that the load extends between the first bearing and the mechanical ground through the first load path, but not the second load path.

Accordingly, in view of the first and second support members and the frangible link, the fan shaft continues to be supported by the first bearing in the event of a fan blade off. However, since the load is supported by the first bearing only through a single load path rather than two, the load can be more flexibly supported, thereby reducing loads on the mechanical ground.

The gas turbine engine may comprise a damping material configured to damp bending movement of the first support member.

Advantageously, vibrational energy from orbiting motion of the fan following a fan blade-off event can be absorbed, thereby reducing damage to the engine.

The damping material may comprise a metallic material having a lattice construction.

The first support member may define a lower radial bending stiffness than the second support member. Consequently, where the first bearing is supported only by the first support member, relatively large radial movement of the fan is permitted relative to where the first bearing is supported by both the first and second support member.

The first support member may comprise an undulant cross section, and may comprise a radial inward bend axially spaced from a radial outward bend. Consequently, a second support member having relatively high flexibility, and also high strength can be provided, thereby allowing for orbiting movement of the fan in the event of a blade-off, whilst maintaining mechanical integrity.

The gas turbine engine may comprise a reduction gearbox configured to drive the fan shaft. The gas turbine may comprise a core compressor. The reduction gearbox may be located axially forward of the core compressor, and axially rearward of the fan.

The inventors have found that, in some instances, where a reduction gearbox is provided between the compressor and the fan, there is relatively little volume axially rearward of the fan to allow for orbiting motion of the fan in the event of a fan blade-off. Consequently, the disclosed arrangement is particularly suitable for a gas turbine engine having a reduction gearbox in this position.

The fan shaft may be coupled to an output shaft of the reduction gearbox by an output coupling. The output coupling may comprise a second frangible link configured to break in the event of a predetermined load being applied to the fan shaft, to thereby decouple the fan shaft and the output shaft of the reduction gearbox. The second frangible link may be configured to break in the event of a predetermined radial load being applied to the fan shaft. Advantageously, in view of the radial displacement caused by orbiting of the fan where the first frangible link is broken, a relatively large radial load is applied to the second frangible link, which then also breaks. This allows for the fan shaft to be disconnected through radial force rather than torsional force. This is preferable, in view of the large torsional loads that must be carried by the output shaft in use.

Advantageously, the arrangement allows for de-coupling of the fan shaft from the gearbox in the event of a fan blade-off, whilst ensuring that the fan shaft remains supported.

The gas turbine engine may comprise a second bearing configured to support the fan shaft. The second bearing may be axially spaced from the first bearing, and may support the fan shaft via the output shaft at a location axially rearward of the second frangible link.

Advantageously, in normal operation, the fan shaft is stiffly supported by two axially spaced bearings at the front of the engine. On the other hand, by only supporting the fan shaft from one bearing at the front of the engine in the event of a fan blade-off, the fan shaft can orbit to an extent controlled by the flexibility of the first load path.

The output shaft may comprise a flexible undulant section, such that the output shaft is vibrationally isolated from the fan shaft. Advantageously, misalignment of gear teeth due to fan shaft vibration or bending is avoided.

The reduction gearbox may comprise an epicyclic gearbox, such as a planetary gearbox or a star gearbox. The epicyclic gearbox may comprise a sun gear which meshes with a plurality of star gears, which in turn mesh with an annular ring gear.

The gearbox may comprise an input shaft which couples the sun gear to a fan drive turbine. The input shaft may comprise a flexibly undulant section.

The fan shaft may comprise a bifurcation at an axial position forward of the reduction gearbox. The fan shaft may bifurcate into a radially outward drive shaft, which may be coupled to the output of the gearbox, and a radially inward gearbox through-shaft. The gearbox through-shaft may pass axially through an inner annulus of the sun gear.

In view of the relatively narrow space defined by the inner annulus of the sun shaft, it is particularly important that the fan shaft is relatively radially constrained in the event of a fan blade-off. Consequently, the present arrangement has been found to be particularly suitable for an arrangement comprising a fan shaft having a through shaft which passes through an inner annulus of the sun shaft.

The engine may comprise a third bearing configured to support the fan shaft. The third bearing may be configured to support the fan through shaft at an axial position rearward of the reduction gearbox.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

An embodiment will now be described by way of example only, with reference to the Figures, in which:
**Figure 1** is a sectional side view of a gas turbine engine;
**Figure 2** is a detailed view of the part of figure 1 enclosed by box A during normal operation of the engine;
**Figure 3** is a similar view to figure 2, but of the engine in a blade-off condition;
**Figure 4** is a graph showing radial deflection compared to load of the fan shaft support as load varies.

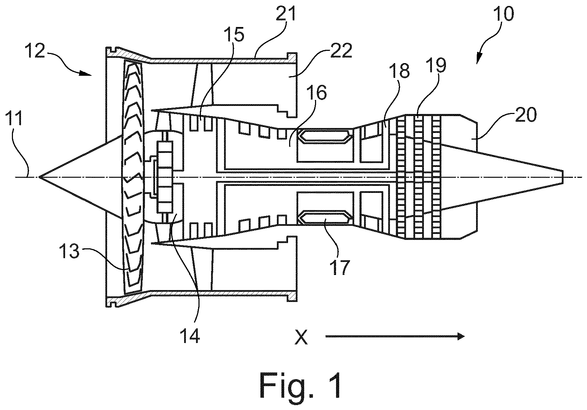

With reference to Figure 1, a gas turbine engine is generally indicated at 10, having a principal and rotational axis 11. The engine 10 comprises, in axial flow series, an air intake 12, a propulsive fan 13, a gearbox 14, an intermediate pressure compressor 15, a high-pressure compressor 16, combustion equipment 17, a high-pressure turbine 18, a low-pressure turbine 19 and an exhaust nozzle 20. A nacelle 25 generally surrounds the engine 10 and defines the intake 12.

The gas turbine engine 10 works in the conventional manner so that air entering the intake 12 is accelerated by the fan 13 to produce two air flows: a first air flow into the intermediate pressure compressor 15 and a second air flow which passes through a bypass duct 22 to provide propulsive thrust. Both flows progress in a generally rearward direction X. A forward direction is defined as being an opposite direction to the rearward direction. The intermediate pressure compressor 15 compresses the air flow directed into it before delivering that air to the high pressure compressor 16 where further compression takes place.

The compressed air exhausted from the high-pressure compressor 16 is directed into the combustion equipment 17 where it is mixed with fuel and the mixture combusted. The resultant hot combustion products then expand through, and thereby drive the high 18 and low-pressure 19 turbines before being exhausted through the nozzle 20 to provide additional propulsive thrust. The high 18 and low 19 pressure turbines drive respectively the high pressure compressor 16 and intermediate pressure compressor 15, each by suitable interconnecting shaft. A low pressure shaft 21 also drives the fan 13 via the gearbox 14. The gearbox 14 is a reduction gearbox in that it gears down the rate of rotation of the fan 13 by comparison with the intermediate pressure compressor 15 and low pressure turbine 19. The gearbox 14 is an epicyclic planetary gearbox having a static ring gear, rotating and orbiting planet gears supported by a planet carrier and a rotating sun gear.

Other gas turbine engines to which the present disclosure may be applied may have alternative configurations. By way of example the gearbox may be a star gearbox rather than an epicyclic planetary gearbox. Additionally or alternatively the gearbox may drive additional and/or alternative components (e.g. the intermediate pressure compressor and/or a booster compressor). The gearbox may even be omitted altogether. Additionally or alternatively such engines may have an alternative number of compressors and/or turbines and/or an alternative number of interconnecting shafts.

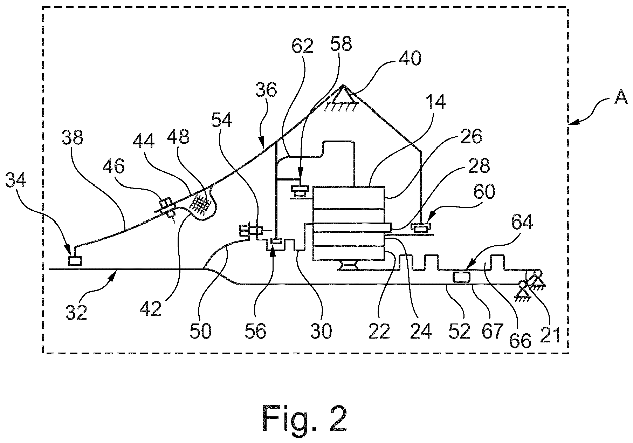

Figure 2 shows the area A of figure 1 in more detail. The sun 22, planet 24 and ring gears 26 are shown. The sun 22 is mounted to the low pressure shaft 21, such that they co-rotate. The planet gears 24 are mounted by a planet carrier 28, which allows the planets to orbit about the sun, thereby turning the planet carrier. The planet carrier 28 is in turn mounted to an output shaft 30, which drives a fan shaft 32, to thereby drive the fan 13.

The fan shaft 32 is rotationally mounted by a support / mounting arrangement. The mounting arrangement includes a first bearing 34 provided at an axially forward end of the shaft 32, adjacent the fan 13, to provide for rotational support of the fan 13. The first bearing 34 is in the form of a roller bearing, though other types could be employed such as ball bearings. The first bearing 34 provides radial support for the fan shaft 32, to keep the fan 13 centered, and to react radial loads in use. Radial loads will be typically imposed due to vibration, aircraft manoeuvres, and out of balance conditions. Since the bearing 32 is a roller bearing, some axial movement is permitted by the bearing 34 to allow for thermal expansion.

The first bearing 34 is in turn supported by a support arrangement. The support arrangement comprise a front support cone 36, which couples the first bearing 34 to a mechanical ground (e.g. the backbone of the engine such as a compressor casing), and again reacts radial loads. The front support cone 36 is annular, and generally tapers from a wider radius adjacent the gearbox 14, to a smaller radius adjacent the first bearing 34.

The front support cone 36 includes a first support member 38, which extends from the first bearing 34 to a mechanical ground 40, such as the backbone of the engine 10. The first support member 38 couples the first bearing 34 to the mechanical ground to thereby define a first load path between the first bearing 34 and the mechanical ground 40. The first support member 38 comprises a flexible portion 42 having a relatively low radial stiffness provided by an undulant cross section. The flexible portion 42 comprises a radially inwardly bent axially rearward portion, and a radially outwardly bent axially forward portion. The bends increase the flexibility of the first support member 38, while maintaining its strength. Consequently, the first load path defines a relatively flexible connection between the first bearing 34 and mechanical ground 40, such that a radial load extending through this load path alone will result in a relatively large radial displacement. However, in view of the high strength of the first support member 38, this large radial load will not generally cause the first support member 38 to break.

The front support cone 36 further comprises a second support member 44. The second support member couples the first bearing 34 to the mechanical ground 40. However, in this embodiment, the second support member 44 does not directly extend between the mechanical ground 40 and the first bearing 34, but is mounted at both rearward and forward ends to the first support member 38, and so is indirectly coupled to the first bearing 34 and mechanical ground. However, the second support member 44 nevertheless defines a second load path, which runs parallel to at least part of the first load path. In view of the relatively straight longitudinal cross-section of the second support member 44, the second support member 44 has a high radial stiffness than the first support member 34.

The forward end of the second support member 44 is coupled to the first support member 38 by a frangible link, also referred to as a mechanical fuse 46. The fuse 46 is configured to break where a radial load is applied thereto is greater than a predetermined load. This predetermined load would be particular to the application, and could be determined by the skilled person, as will be described later. Examples of suitable mechanical fuses include one or more bolts extending through overlapping plates. The inventors have found that, in one application, a plurality of ¼ inch Inconel bolts, which may or may not be threaded, could be used as the mechanical fuse 46. When the fuse 46 in intact, a load applied to the first bearing 34 by the fan shaft 32 (such as vibrational, manoeuvre or fan blade-off loads) is transferred to the mechanical ground 40 through both the first and second load paths defined by the first and second support members 38, 44. However, as will be appreciated, where the fuse 46 breaks, the second support member is no longer coupled to the first bearing 34, and so loads from the first bearing 34 to the mechanical ground 40 are transferred through the first load path only. In view of the higher radial stiffness of the second member 44 compared to the first 38, the front support cone 36 defines a higher radial stiffness when fuse 46 is intact, compared to where the fuse 46 is broken.

In view of the undulant cross-sectional shape of the first support member 38, and the axial overlapping of the second support member 44, an annular cavity is provided between the first and second support members 38, 44. A damping material 48 such as a lattice structure comprising a metallic material is provided within this space, which is in contact with at least the first support member 38. The purpose of this damping material will be described below.

Figure 2 also shows further optional features of the disclosed engine. The fan shaft 32 comprises a single tubular component at the location where it engages against the first bearing 34. However, the fan shaft 32 bifurcates into a radially outer drive shaft 50, and a radially inner gearbox through shaft 52.

The drive shaft 50 is configured to transfer torque from the output shaft 30 to the fan 13, and consequently, carries large amounts of torque in use. However, it is desirable for the drive shaft 50 to disengage from the gearbox output shaft 30 in the event of a fan unbalance, which might otherwise cause severe damage to the gearbox 14. One method to de-couple the gearbox 14 from the drive shaft 50 would be to utilise a torque activated fuse. However, in view of the large torque encountered during normal operation, the torque fuse would have to activate only at very high torques. This would require the other components in the drive line to be capable of handling higher torques than the torque fuse activation torque, which would increase the weight of the system. Furthermore, in some cases, the torque imposed by the fan 13 in the event of a fan blade-off may not be higher than normal operation, which would result in the torque fuse failing to activate, thereby leading to damage to the gearbox.

In order to resolve this problem, the drive shaft 50 is coupled to the output shaft 30 of the reduction gearbox 14 by a second frangible link in the form of a second mechanical fuse 54. The second mechanical fuse 54 is similar to the first, and is again configured to break in the event that a predetermined radial load is exceeded. The drive shaft 50 is supported by a second bearing 56, which supports the drive shaft 50 via contact with the output shaft 30. The second bearing 56 is located rearward of the second mechanical fuse 54, and forward of the gearbox 14.

In normal operation, the radial load on the fuse 54 is relatively low, since the shaft 32 is supported by the first bearing 34 via both the first and second loads paths, so there is relatively little radial movement in operation. Furthermore, the fan is balanced, so radial forces are low. However, where the first fuse 46 is activated in the event of a blade-off, the radial forces at the drive shaft 50 increase. On the other hand, since the output shaft 30 is relatively rigidly supported by the second bearing 56, a radial force is produced by the radial movement of the drive shaft 50 relative to the relatively static output shaft 30. Since the output shaft 30 and drive shaft 50 are connected by the second mechanical fuse 56, this high radial force exceeds the predetermined force, and causes the second mechanical fuse 54 to activate. Once the second mechanical fuse is activated, the drive shaft 50 is no longer supported by the second bearing 56, and so is primarily supported by the first bearing 34. This permits the shaft 32 to orbit, with the radial extent of the orbit being defined by the stiffness and damping properties of the first load path.

The shaft 32 is also supported by a third bearing 67, which mechanically grounds a rearward end of the shaft 32, such that the shaft 32 is also supported by at least two bearings. In the current embodiment, the third bearing is in the form of an inter-shaft bearing located axially rearward of the gearbox 14 between the sun through shaft and the low pressure shaft 21, such that the sun through shaft 52 is supported by the low pressure shaft 21.

Further supports are also provided to provide support for components of the gearbox 14. A planet carrier front support bearing 58 is provided at a forward end of the planet carrier 28, which radially supports the front end of the planet carrier 28, to maintain tooth alignment as the planet carrier rotates. A planet carrier rear support bearing 60 is also provided at a rearward end of the planet carrier 28, to rotationally support a rearward end of the carrier 28. The ring gear 26 is supported by the planet gears 28. Rotation of the ring gear 28 is prevented by an anti-rotation mounting 62. The sun gear 22 is supported by the planet gears 24. Consequently, the sun 22, planet 24 and ring gears 26 are each supported by the planet carrier 28, which is in turn supported by the front and rear support bearings 58, 60.

The sun gear 22 is driven by the low pressure shaft 21, and includes a radially flexible portion 64 defined by one or more undulant sections. The output shaft 30 also includes undulant sections to provide radial flexibility. In view of the flexibility provided by the flexible low pressure shaft 21 and output shaft 30, the gearbox 14 is isolated from vibrations of the fan 13 and low pressure shaft 21. Optionally, a third mechanical fuse 66 may be provided. The third mechanical fuse 66 is configured to disconnect the low pressure shaft 21 from the sun gear 22 in the event of a predetermined radial force being applied. The purpose of the third mechanical fuse will be described later.

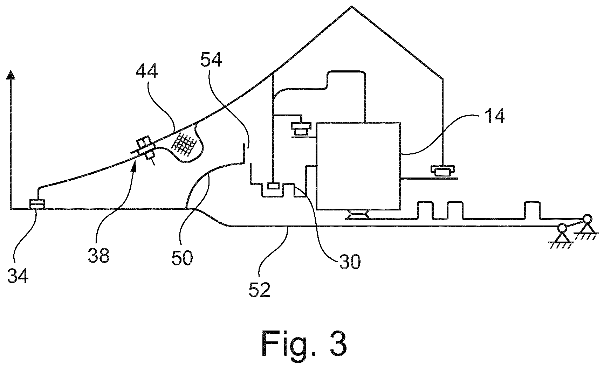

Figure 3 shows a similar view of the engine 10 as figure 2, but where both the first and second mechanical fuses 46, 54 have been activated. Activation could be caused by, for example, extreme manouvering, or a fan imbalance caused by a fan blade-off. Consequently, the first bearing 34 is supported through the first load path only, i.e. through the first support member 38, and not through the second support member 44. This is because one end of the second support member 44 is no longer coupled to the first support member 38, and so radial movement of the bearing 34 and first support member 38 does not apply a bending force to the second support member 44. Radial movement of the first support member 38 causes compression and expansion of the damping material 48 against the second support member 44, thereby causing this material to absorb energy, and reduce the amount of radial movement of the first bearing 34. On the other hand, prior to activation of the first fuse 44, the first and second support members 38, 44 are fixed relative to one another, so the damping material does not provide damping in normal operation. However, in the event o of extreme bending of the first support member 38, the first and second support members 38, 44 may contact one another, such that the fan shaft 34 is supported by both the first and second load paths once more.

As can be seen, in view of the lower stiffness of the first load path compared to the combined first and second load paths, in addition to the increased radial load caused by the fan imbalance, the shaft 32 orbits and bends rather than rotating about a central axis. This compliance of the first load path results in reduced loads being applied to the engine 10 static components in use, which reduces damage to the engine, and may allow for reduced stiffness (and so lower weight) components to be used in the rest of the engine static structure. This reduced weight will reduce the overall weight of the engine 10, resulting in fuel savings. This increased radial movement leads to increased radial forces at the second mechanical fuse 54, which causes this to activate. Consequently, the shaft 32 is now supported by only the first bearing 34 at a forward end, and the third bearing at a rearward end. The gearbox 14 is isolated from the forces that would be imposed by this orbiting motion in view of the disconnection of the output shaft 30 from the drive shaft 50 in view of the activation of the second mechanical fuse 54. Consequently, the loads on the forward and rearward planet carrier support bearings 60, 62, as well as the gearbox teeth are low.

A further advantage of the isolation of the gearbox 14 from the fan 13, is that it allows the engine 10 to be shutdown, while the fan can continue to rotate. By allowing the fan to continue to rotate, drag produced from the damaged engine can be reduced. Furthermore, continued rotation of the fan 13 in the event of a fan blade-off may be a regulatory condition. This means that the gearbox 14 does not have to rotate in this condition. This is particular advantageous where the planet gears 24 are mounted to the planet carrier 28 by journal bearings, as oil does not therefore have to be continuously supplied to these bearings while the engine is shutdown in flight.

In some cases, the orbit of the fan through shaft 52 may cause contact of the fan through shaft with the low pressure shaft 21, as can be seen from figure 2. In this case, contact between these two shafts may induce a radial load, which would activate the optional third mechanical fuse 66. This would allow the flexible portion 64 of the low pressure shaft 21 to move radially with the fan through shaft 52, thereby reducing fretting and wear between these shafts, and allowing the orbit of the fan 13 to increase. Optionally, a "bumper" bearing could be employed, which engages the shafts to allow relative rotation in this event.

This arrangement also solves a further problem in relation to conventional fan blade-off fusing arrangements. In a conventional arrangement, a fuse is provided such that the fan 13 is no longer supported by the front bearing 34. However if a conventional arrangement where to be used in a geared engine having a fan through shaft 52, the fan through shaft 52 would then contact the inner annular surface of the sun shaft 22, causing rubbing therebetween. This would cause heating in this region, as well as wear. Furthermore, it has been determined by the inventors that the resultant rubbing may shift the resonant frequency of the fan shaft 13 to within the range or rotational frequencies at which the fan 13 would operate during shut-down. This would result in increased vibration, and potential damage to the engine 10, and possibly also the aircraft. By supporting the fan 13 at the front bearing with a support having reduced stiffness, orbiting of the fan shaft can be controlled.

Further beneficial effects of this arrangement have also been found by the inventors. The reduction gearbox 14, core engine compressors 15, 16, turbines 18, 19 and shaft 21 represent a large amount of rotational inertia. Consequently, on engine shutdown, it may take a considerable time for the fan 13 to slow to windmill speed. Further damage to the engine can occur in this time-frame. By providing a second mechanical fuse 54 which disconnects the fan 13 from the gearbox and other engine components 15, 16, 18, 19, 21, rotational inertia coupled to the fan is reduced, and so fan speed can be reduced more quickly, thereby reducing damage to the engine in the event of an engine shutdown in flight.

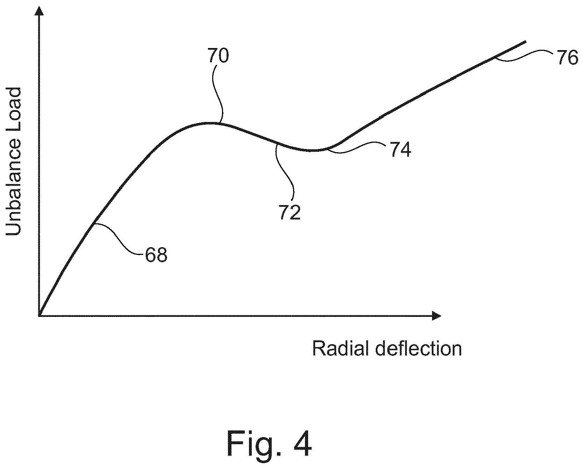

Figure 4 graphically shows a relationship between the loads imposed on the static structure (in particular the mechanical ground 40) in the event of a fan bade off relative to deflection of the first bearing 34. As the deflection of the fan 13 increases at the start of a fan blade-off event, the load imposed on the static structure increases linearly (shown as region 68 in the graph) as the load is transferred through both the first and second load paths. However, at point 70 on the graph, the predetermined radial load for activation of the first mechanical fuse 46 is reached. Consequently, the load is no longer transferred through the second support member 44. The radial deflection of the first bearing 34 increases, while the load on the static structure is reduced. This is shown on the graph as region 72. As the radial deflection continues to increase, the load begins to increase linearly once more, as the system reaches a new equilibrium. However, the rate of increase (i.e. the gradient on the graph) is reduced, in view of the lower stiffness of the first load path compared to the first and second load paths combined.

Consequently, it can be seen that the effect of the arrangement of the first and second support members and mechanical fuse defines a non-linear deflection to unbalanced load relationship, i.e. a non-linear stiffness. During normal operation (i.e. operation within region 68, below the predetermined force), stiffness is substantially linear. However, as forces increase, the stiffness is reduced substantially, thereby reducing structural loads, while maintaining a shaft orbit having a relatively small radial extent.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, while the disclosed embodiment describes a geared turbofan, it will be understood that the disclosure is also applicable to a direct drive turbofan, in which a shaft extends directly between a fan drive turbine and a fan, without an intermediate reduction gearbox. Similarly, the disclosure is also applicable to engines having three shafts.

## Claims

1. A gas turbine engine (10) comprising:
a fan (13);
a fan shaft (32) configured to rotationally support the fan (13)
a first bearing (34) configured to rotationally support the fan shaft (32); and
a support arrangement configured to support the first bearing (34);
the support arrangement comprising a first support member (38) coupled to the first bearing (34) and to a mechanical ground (40) to define a first load path, and a second support member (44) coupled to the mechanical ground (40) and the first bearing (34) to define a second load path, the second support member (44) being coupled to one of the first bearing (34) and the mechanical ground (40) by a first frangible link (46), such that, in normal use, a load extends between the bearing (34) and the mechanical ground (40) through the first and second loads paths, and in the event of a predetermined radial load being applied to the first bearing (34), the frangible link (46) breaks such that the load extends between the first bearing (34) and the mechanical ground (40) through the first load path, but not the second load path.

2. A gas turbine engine according to claim 1 wherein gas turbine engine (10) comprises a damping material (48) configured to damp bending movement of the first support member (38).

3. A gas turbine engine according to claim 2, wherein the damping material (48) comprises a metallic material having a lattice construction.

4. A gas turbine engine according to any of the preceding claims, wherein the first support member (38) defines a lower radial bending stiffness than the second support member (44).

5. A gas turbine engine according to any of the preceding claims, wherein the first support member (38) comprises an undulant cross section.

6. A gas turbine engine according to any of the preceding claims, wherein the gas turbine engine (10) comprises a reduction gearbox (14) configured to drive the fan shaft (32).

7. A gas turbine engine according to claim 6, wherein the gas turbine (10) comprises a core compressor (15, 16) and the reduction gearbox (14) is located axially forward of the core compressor (15, 16), and axially rearward of the fan (13).

8. A gas turbine engine according to claim 6 or claim 7, wherein the fan shaft (32) is coupled to an output shaft (30) of the reduction gearbox (14) by a second frangible link (54) configured to break in the event of a predetermined load being applied to the fan shaft (32), to thereby decouple the fan shaft (32) and the output shaft (30) of the reduction gearbox (14).

9. A gas turbine engine according to claim 8, wherein the second frangible link (54) is configured to break in the event of a predetermined radial load being applied to the fan shaft (32).

10. A gas turbine engine according to any of the preceding claims, wherein the gas turbine engine (10) comprises a second bearing (56) configured to support the fan shaft (32), the second bearing (56) being axially spaced from the first bearing (34).

11. A gas turbine engine according to claim 10 when dependent on claim 8, wherein the second bearing (56) is configured to support the fan shaft (32) via the output shaft (30) at a location axially rearward of the second frangible link (54).

12. A gas turbine engine according to claim 8 or any claim dependent thereon, wherein the output shaft (30) comprises a flexible undulant section, such that the output shaft (30) is vibrationally isolated from the fan shaft (32).

13. A gas turbine engine according to claim 6 or any claim dependent thereon, wherein the reduction gearbox (14) comprises an epicyclic gearbox.

14. A gas turbine engine according to any of the preceding claims, wherein the fan shaft (32) comprises a bifurcation at an axial position forward of the reduction gearbox (14), which bifurcates the fan shaft (32) into a radially outward drive shaft (50), which is coupled to the output shaft (30) of the gearbox (14), and a radially inward gearbox through-shaft (52).

15. A gas turbine engine according to claim 14, wherein the engine (10) comprises a third bearing (67) configured to support the fan through shaft (52), the third bearing (67) being configured to support the fan through shaft (52) at an axial position rearward of the reduction gearbox (14).
